# EUROPÄISCHE PATENTSCHRIFT

(11) **EP 0 328 958 B1**
(45) Veröffentlichungstag und Bekanntmachung des Hinweises auf die Patenterteilung: **27.04.1994**
(21) Anmeldenummer: 89101856.6
(22) Anmeldetag: 03.02.1989
(51) Int. Cl.: B23D 37/00

(54) **Vorrichtung zum Bearbeiten von rotationssymmetrischen Werkstückflächen**
Device for working rotation-symmetrical work piece surfaces
Dispositif d'usinage de surfaces de pièces à symétrie de révolution

(30) Priorität: 13.02.1988 DE 3804502
(43) Veröffentlichungstag der Anmeldung: 23.08.1989
(73) Patentinhaber: Gebr. Heller Maschinenfabrik GmbH, D-72622 Nürtingen (DE)
(72) Erfinder:
(74) Vertreter: Jackisch-Kohl, Anna-Katharina

(56) Entgegenhaltungen:
- EP-A- 0 214 624
- DE-A- 2 717 517
- DE-A- 2 942 169
- US-A- 2 468 745
- US-A- 3 750 513

## Beschreibung

Die Erfindung betrifft eine Vorrichtung zum Bearbeiten von rotationssymmetrischen Werkstückflächen nach dem Oberbegriff des Anspruches 1.

Bei bekannten Vorrichtungen dieser Art (DE-A1 26 18 039, DE-C2 28 36 383) lassen sich die Werkzeuge nur mit großem Aufwand ein- und ausbauen. Hierbei sind erhebliche manuelle Operationen notwendig, die zu großen Stillstandszeiten der Vorrichtung führen.

Der Erfindung liegt die Aufgabe zugrunde, die gattungsgemäße Vorrichtung so auszubilden, daß die Werkzeuge schnell und automatisch ein- und ausgebaut werden können.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung sind die beiden Werkzeuge an ihren einander zugewandten Enden aneinander abgestützt. Das eine Werkzeug greift mit seinem axialen Vorsprung in die Vertiefung des anderen Werkzeuges ein.

Da die Werkzeuge axial relativ zueinander verstellbar sind, lassen sie sich mit einer geeigneten Ladeeinrichtung schnell und automatisch austauschen. Die Werkzeuge werden zum Ausbau so weit zusammengeschoben, daß sie von den Spindeln freikommen und der Vorrichtung automatisch entnommen werden können. Zum Einbau lassen sich die Werkzeuge dann entsprechend axial auseinanderfahren. Die Stillstandszeiten beim Austausch der Werkzeuge können somit sehr gering gehalten werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in schematischer Darstellung eine erfindungsgemäße Vorrichtung, in die eine zu bearbeitende Kurbelwelle eingespannt ist,
- Fig. 2: in vergrößerter Darstellung und im Schnitt die Einspannung eines Werkzeuges der erfindungsgemäßen Vorrichtung,
- Fig. 3: einen Schnitt längs der Linie III-III in Fig. 2,
- Fig. 4: in schematischer Darstellung und in Seitenansicht ein Werkzeug der erfindungsgemäßen Vorrichtung, mit dem eine Kurbelwelle bearbeitet wird,
- Fig. 5: eine zweite Ausführungsform eines Werkzeuges der erfindungsgemäßen Vorrichtung in einer Darstellung entsprechend Fig. 4,
- Fig. 6: einen mit der erfindungsgemäßen Vorrichtung hergestellten Einstich in einer Kurbelwelle,
- Fig. 7: einen mit der erfindungsgemäßen Vorrichtung hergestellten Einstich und Hinterstich in einer Kurbelwelle,
- Fig. 8: in schematischer Darstellung einen Teil einer Ladeeinrichtung der erfindungsgemäßen Vorrichtung.

Die nachfolgend beschriebene Vorrichtung dient zum Bearbeiten von Kurbelwellen, Stangen, Nockenwellen, Getriebewellen und dgl. Im folgenden wird die Vorrichtung anhand der Bearbeitung einer Kurbelwelle erläutert.

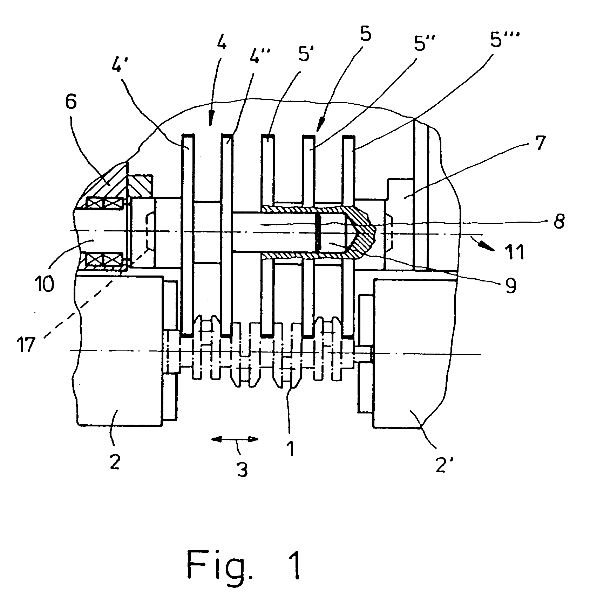

Fig. 1 zeigt eine Vorrichtung, in der die zu bearbeitende Kurbelwelle 1 an ihren beiden Enden in bekannter Weise in Spannstöcken 2, 2′ drehbar eingespannt ist. Während der Bearbeitung dreht die Kurbelwelle um die Achse der gerade zu bearbeitenden Lager. Die Spannstöcke 2, 2′ sind in bekannter Weise jeweils in Pfeilrichtung 3 verstellbar.

Zur Bearbeitung der Lager der Kurbelwelle 1 sowie auch zur Bearbeitung ihrer Seitenwangen ist die Vorrichtung mit zwei Satzwerkzeugen 4 und 5 versehen, die im Dreh- und im Drehräumverfahren eingesetzt werden. Im Ausführungsbeispiel hat das Satzwerkzeug 4 zwei Einzelwerkzeuge 4′, 4˝ und das Satzwerkzeug 5 drei Einzelwerkzeuge 5′ bis 5‴. Die Satzwerkzeuge 4 und 5 können vorzugsweise unabhängig voneinander drehbar angetrieben werden. Die Spindelstöcke 6, 7 der Satzwerkzeuge 4, 5 sind in Achsrichtung sowie in Richtung auf das Werkstück verstellbar.

Die Satzwerkzeuge 4, 5 sind so ausgebildet, daß ihre Einzelwerkzeuge 4′, 4˝, 5′ bis 5‴ gleichzeitig eine Bearbeitung an der Kurbelwelle durchführen. Im Ausführungsbeispiel gemäß Fig. 1 bearbeiten die Einzelwerkzeuge die Hauptlager der Kurbelwelle 1.

Beim Drehräumverfahren werden die beiden Satzwerkzeuge 4, 5 vorteilhaft gleichsinnig und mit gleicher Geschwindigkeit gedreht. Es ist aber selbstverständlich auch möglich, die beiden Satzwerkzeuge mit unterschiedlichen Geschwindigkeiten und/oder gegensinnig anzutreiben.

Das Satzwerkzeug 4 hat einen über das letzte Einzelwerkzeug 4˝ axial ragenden Dorn 8, der kreisförmigen Querschnitt hat und in eine entsprechende zentrische Vertiefung 9 des anderen Satzwerkzeuges 5 eingreift. Die beiden Satzwerkzeuge 4, 5 stützen sich infolge dieser Ausbildung aneinander ab, so daß keine zusätzlichen Lager zur Abstützung erforderlich sind. Dadurch hat die Vorrichtung einen konstruktiv einfachen Aufbau. Da keine zusätzlichen Lager notwendig sind, lassen sich die Satzwerkzeuge 4, 5 schnell und gegebenenfalls automatisch austauschen.

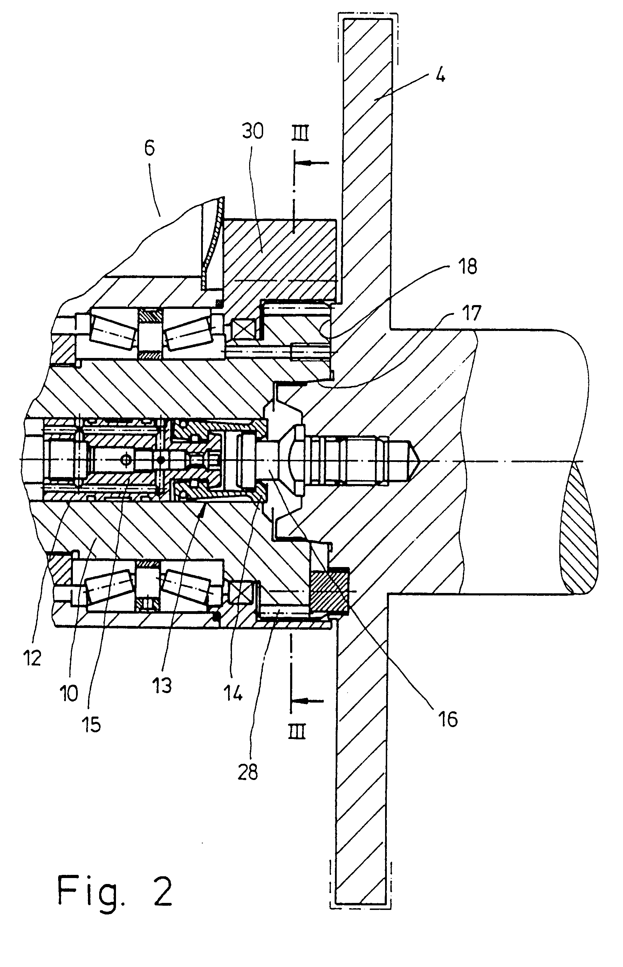

Die Werkzeugspindel 10 weist eine zentrale Durchgangsöffnung 12 auf (Fig. 2), in der in bekannter Weise eine Spanneinrichtung 13 für das Werkzeug 4 untergebracht ist. Die Spanneinrichtung 13 hat Spannzangen 14, die durch eine in der Durchgangsöffnung 12 axial verschiebbare Spannstange 15 aus einer Freigabe- in eine Spannstellung verstellt werden können. Die Spannzangen 14 ergreifen in der Spannstellung (Fig. 2) einen Anzugsbolzen 16, der an seinem freien Ende mit einem Bund versehen ist. Er wird von den freien Enden der Spannzangen 14 in bekannter Weise hintergriffen. Über den Anzugsbolzen 16 wird das Werkzeug 4 so gegen die Spindel 10 gezogen, daß es an der Stirnseite 18 plan anliegt. Zur Zentrierung ist das Werkzeug 4 mit einem Kurzkegel 17 versehen, der in eine kegelförmige Aufnahme der Spindel 10 eingreift.

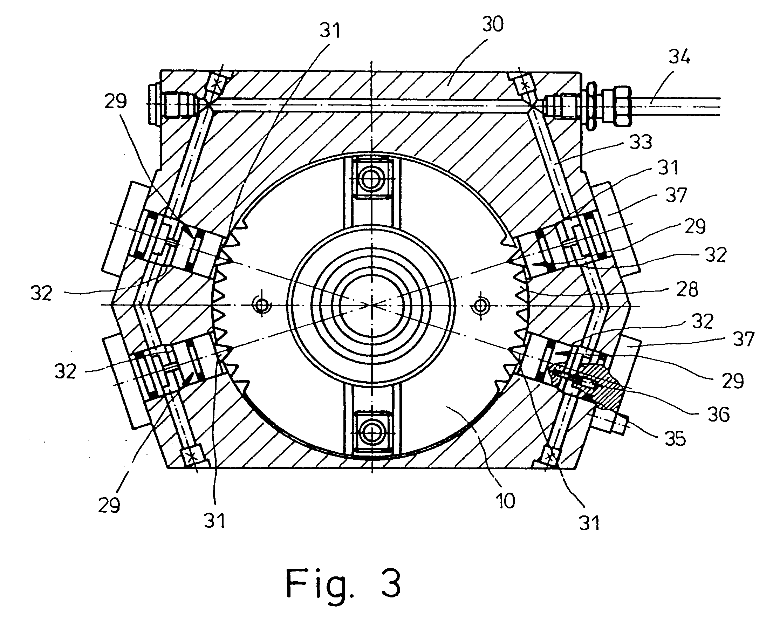

Mit den Satzwerkzeugen 4, 5 kann das Werkstück sowohl im Drehräumverfahren als auch im Drehverfahren bearbeitet werden. Bei der Bearbeitung im Drehverfahren wird das Satzwerkzeug 4 bzw. 5 gegenüber dem Spindelstock 6 bzw. 7 verriegelt. Dies wird für das Werkzeug 4 anhand der Fig. 2 und 3 näher erläutert. Die Spindel 10 ist mit einer Außenverzahnung 28 versehen (Fig. 3), in die wenigstens ein Verriegelungskörper 29 eingreift, der im Gehäuse 30 des Spindelstockes 6 untergebracht ist. Um auch bei hohen Belastungen während der Drehbearbeitung eine einwandfreie und sichere Verriegelung zu erreichen, sind im Gehäuse 30 bevorzugt mehrere Verriegelungskörper 29, im Ausführungsbeispiel vier Verriegelungskörper untergebracht, von denen jeweils zwei diametral einander gegenüberliegend angeordnet sind. Die Verriegelungskörper 29 sind als einseitig beaufschlagte Kolben ausgebildet, die an ihrer der Spindel 10 zugewandten Stirnseite mit jeweils einem in die Außenverzahnung 28 eingreifenden Zahn 31 versehen sind. Die Verriegelungskörper 29 liegen in radial zur Spindel 10 verlaufenden und nach außen abgeschlossenen Zylinderräumen 32 im Gehäuse 30. In sie mündet jeweils eine Druckmittelleitung 33, durch die das zur Beaufschlagung der Verriegelungskörper 29 dienende Druckmittel in die Zylinderräume 32 geführt wird. Sämtliche Druckmittelleitungen 33 sind an eine gemeinsame Zuführleitung 34 angeschlossen.

Die Spindel 11 kann in gleicher Weise mit solchen Verriegelungskörpern mit dem Spindelstock 7 verriegelt werden.

Um die Verriegelungskörper 29 in den Zylinderräumen 32 zuverlässig gegen Verdrehen zu sichern, sind die Verriegelungskörper an ihrer vom Zahn 31 abgewandten Seite mit einem vorstehenden außermittigen Bolzen 35 versehen, der in einer Sacklochbohrung 36 eines den Zylinderraum 32 abschließenden Verschlußkörpers 37 geführt ist. Fig. 3 zeigt die Verschlußkörper 29 in ihrer Verriegelungslage, in der ihre Zähne 31 in die Außenverzahnung 28 der Spindel 10 eingreifen. Durch die Verriegelung der Spindel 10, 11 ist das jeweilige Werkzeug während der Drehbearbeitung äußerst stabil und schwingungsfrei gehalten, so daß das Werkzeug verhältnismäßig geringen Verschleiß aufweist und eine hohe Bearbeitungsgenauigkeit sicherstellt.

Soll die Verriegelung der Spindel 10, 11 aufgehoben werden, dann werden die Verriegelungskörper 29 lediglich entlastet. Beim Drehen der Spindel 10, 11 werden dann die entlasteten Verriegelungskörper in den Zylinderräumen 32 zurückgeschoben.

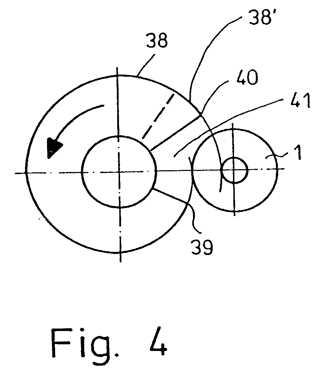

Fig. 4 zeigt eine Ausführungsform der Einzelwerkzeuge der Satzwerkzeuge 4, 5. Bei dieser Ausführungsform ist das Einzelwerkzeug mit einer spiralig verlaufenden Schneidenanordnung 38 versehen. Sie erstreckt sich über einen Winkelbereich von etwa 330°. Mit dem Schneidenabschnitt 38′ können, wie unten noch erläutert werden wird, Hinterstiche in der Kurbelwelle 1 hergestellt werden. Zwischen dem Anfangspunkt 39 und dem Endpunkt 40 der Schneidenanordnung 38 ist das Werkzeug mit einem sektorförmigen Ausschnitt 41 versehen.

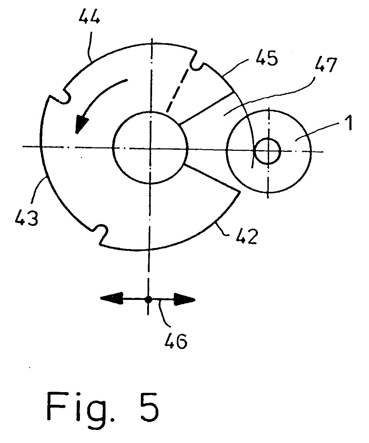

Anstelle der durchgehend spiralförmig verlaufenden Schneidenanordnung 38 kann das Einzelwerkzeug jedes Satzwerkzeuges 4, 5 auch mehrere Schneidenabschnitte 42 bis 45 aufweisen (Fig. 5), in denen die Schneiden spiralförmig angeordnet sein können. Es ist somit in einzelne Segmente aufgeteilt. Mit den spiralförmig verlaufenden Schneidenabschnitten 42 bis 44 kann die Kurbelwelle 1 im Drehräumverfahren bearbeitet werden, wobei das Werkzeug nur um seine Achse dreht, infolge der spiralförmig verlaufenden Schneidenabschnitte 42 bis 44 jedoch nicht zur Kurbelwelle zugestellt werden muß. Mit den Schneidenabschnitten 42 bis 44 kann die Kurbelwelle 1 aber auch im Drehverfahren bearbeitet werden. Dabei muß aber das Werkzeug beim Bearbeiten zur Kurbelwelle zugestellt werden (Pfeil 46). Mit dem Schneidenabschnitt 45, der im Ausführungsbeispiel kürzer ist als die Schneidenabschnitte 42 bis 44, werden ebenfalls Hinterstiche im Drehverfahren hergestellt. Dieses Einzelwerkzeug hat wiederum einen sektorförmigen Ausschnitt 47.

Das Einzelwerkzeug gemäß Fig. 5 ermöglicht bei kleinem Durchmesser eine große Abtragleistung. Wird beispielsweise mit dem Schneidenabschnitt 42 eine Drehräumbearbeitung an der Kurbelwelle 1 durchgeführt, dann wird das Werkzeug zurückgedreht, wenn der Endpunkt des Schneidenabschnittes 42 erreicht ist. Um nun erneut abtragen zu können, muß das Werkzeug in Pfeilrichtung 46 gegen die Kurbelwelle 1 zugestellt werden. Dann kann erneut mit dem Schneidenabschnitt 42 Material im Drehräumverfahren abgetragen werden.

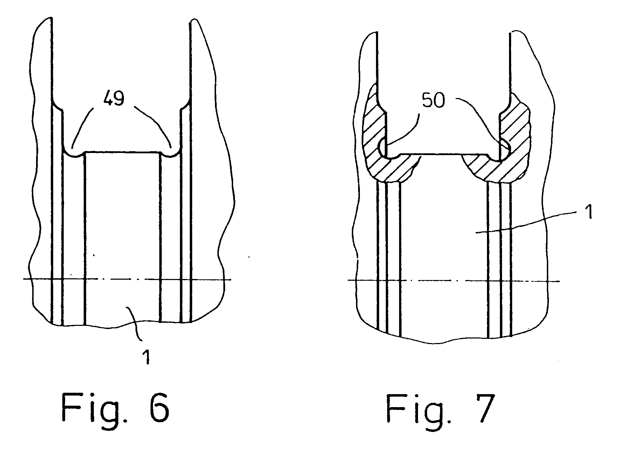

Fig. 6 zeigt einen Teil der Kurbelwelle 1. Mit den Satzwerkzeugen 4, 5 können im Lager der Kurbelwelle 1 Einstiche 49 hergestellt werden. Sie lassen sich im Drehräumverfahren oder im Drehverfahren an der Kurbelwelle 1 herstellen. Wird im Drehräumverfahren gearbeitet, dann drehen die Satzwerkzeuge 4, 5 in Richtung der Pfeile in den Fig. 4 und 5, wobei auch die Kurbelwelle 1 gedreht wird. Da bei den Werkzeugen gemäß Fig. 4 und 5 die jeweiligen Schneiden spiralförmig verlaufen, ist eine Zustellung der Werkzeuge während der Drehräumbearbeitung nicht notwendig. Lediglich beim Werkzeug nach Fig. 5 ist eine Zustellung in Pfeilrichtung 46 erforderlich, wenn nach einem Durchlauf einer der Schneidenabschnitte 42 bis 44 mit demselben Schneidenabschnitt eine weitere Drehräumbearbeitung durchgeführt werden soll.

Die beschriebenen Werkzeuge können auch zur Drehbearbeitung verwendet werden. In diesem Falle wird das jeweilige Werkzeug über die Spindel 10 bzw. 11 mit den Verriegelungskörpern 29 gegen Drehen verriegelt, wie anhand von Fig. 3 beschrieben worden ist. Während der Drehbearbeitung wird die Kurbelwelle 1 um die Achse der Lager gedreht.

Mit den beschriebenen Werkzeugen können an der Kurbelwelle 1 auch Hinterstiche 50 (Fig. 7) hergestellt werden. Zur Herstellung dieser Hinterstiche 50 ist zumindest eines der Einzelwerkzeuge 4′, 4˝ bzw. 5′ bis 5‴ der Satzwerkzeuge 4, 5 mit einer entsprechenden Schneidenanordnung versehen. Beim Werkzeug gemäß Fig. 4 ist hierzu der Schneidenabschnitt 38′ vorgesehen, während beim Werkzeug gemäß Fig. 5 hierfür der Schneidenabschnitt 45 herangezogen wird. Die übrigen Einzelwerkzeuge der Satzwerkzeuge 4, 5, die nicht zur Herstellung von solchen Hinterstichen benötigt werden, weisen den Schneidenabschnitt 38′ bzw. 45 nicht auf. Dementsprechend erstrecken sich die sektorförmigen Ausschnitte 41 bzw. 47 dieser Einzelwerkzeuge bis in diesen Bereich (gestrichelte Linie in den Fig. 4 und 5). Dementsprechend sind die Ausschnitte 41 und 47 dieser Einzelwerkzeuge größer als bei den Einzelwerkzeugen, die zur Herstellung der Hinterstiche 50 verwendet werden. Die Satzwerkzeuge 4, 5 werden zur Herstellung der Hinterstiche 50 radial in Richtung auf die Kurbelwelle 1 zugestellt. Die größeren Ausschnitte 41, 47 sind in Umfangsrichtung so breit, daß sie bei der Drehung des jeweiligen Satzwerkzeuges 4 bzw. 5 bei der Herstellung der Hinterstiche 50 nicht mit der Kurbelwelle 1 in Berührung kommen. Sobald die Satzwerkzeuge 4, 5 zugestellt sind, wird dasjenige Satzwerkzeug, das das Einzelwerkzeug für den Hinterstich aufweist, in Umfangsrichtung gegenüber der zu bearbeitenden Kurbelwelle ausgerichtet. Während der Drehbearbeitung zur Herstellung der Hinterstiche 50 werden beide Satzwerkzeuge 4, 5, da sie aneinander abgestützt sind, gemeinsam radial zur Kurbelwelle zugestellt und dasjenige Satzwerkzeug, das das Einzelwerkzeug für die Hinterstiche aufweist, außerdem noch zusätzlich axial gegenüber dem anderen Satzwerkzeug verschoben. Dadurch läßt sich sehr einfach der Hinterstich 50 an der Kurbelwelle 1 herstellen. Sobald der eine Hinterstich 50 hergestellt ist, wird das entsprechende Satzwerkzeug in der entgegengesetzten Richtung verschoben und dann der andere Hinterstich in der gleichen Weise durch Drehbearbeitung hergestellt. Es ist auch möglich, beide Spindelstöcke 6, 7 auf einem gemeinsamen Schlitten zu lagern. Dann werden beide Satzwerkzeuge 4, 5 gemeinsam axial verstellt.

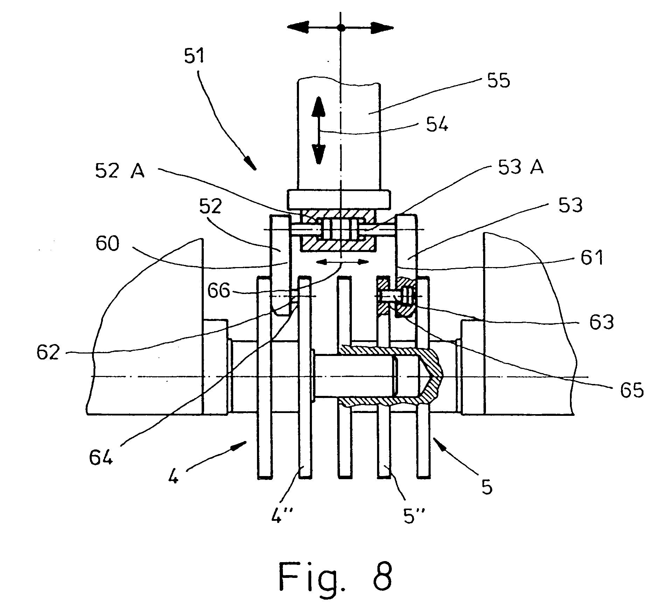

Die Satzwerkzeuge 4, 5 lassen sich einfach in die Vorrichtung einbauen und auch aus ihr ausbauen. Wie anhand von Fig. 2 erläutert worden ist, können die Satzwerkzeuge 4 mittels der Anzugsbolzen 16 an der jeweiligen Spindel 10, 11 befestigt werden. Zum Ausbau der Satzwerkzeuge 4, 5 werden die Spanneinrichtungen in bekannter Weise in den Spindeln 10, 11 axial nach vorn geschoben, so daß die Spannzangen 14 den Anzugsbolzen 14 freigeben können. Bei dieser Axialverschiebung wird der Anzugsbolzen und damit auch das jeweilige Satzwerkzeug 4, 5 zweckmäßigerweise geringfügig axial gegenüber der Spindel 10 bzw. 11 weggeschoben. Durch das Lösen der Spanneinrichtung 13 wird somit das Satzwerkzeug 4 bzw. 5 so weit axial verschoben, daß sein Kurzkegel 17 (Fig. 1 und 2) von der entsprechenden Aufnahme der Spindel 10, 11 freikommt. Anschließend werden die Satzwerkzeuge mittels einer Greifeinrichtung 51 so weit axial in Richtung zueinander verschoben, bis die Satzwerkzeuge von den Spindeln 10, 11 vollständig frei sind. Die Greifeinrichtung 51 (Fig. 8) hat zwei gegeneinander verschiebbare Greifarme 52 und 53, die an einem quer zu den Satzwerkzeugen 4, 5 in Pfeilrichtung 54 verstellbaren Träger 55 vorgesehen sind. Die Greifarme 52, 53 sind über Kolben-Zylinder-Anordnungen 52A, 53A in Pfeilrichtung 66 verschiebbar.

Die Greifeinrichtung 51 wird in Pfeilrichtung 54 so zu den Satzwerkzeugen 4, 5 zugestellt, daß die Greifarme 52, 53 zwischen die Einzelwerkzeuge der beiden Satzwerkzeuge ungehindert einfahren können. Um die Satzwerkzeuge 4, 5 nach dem Lösen der Anzugsbolzen 16 noch axial in Richtung zueinander zu verschieben, werden die Greifarme 52, 53 so zueinander eingestellt, daß sie im Ausführungsbeispiel an den Einzelwerkzeugen 4˝ und 5˝ anliegen. Durch Verschieben der Greifarme 52, 53 können dann die Satzwerkzeuge 4, 5 von den Spindeln 10, 11 vollständig gelöst werden.

Die Greifarme 52, 53 sind nahe ihren freien Enden auf ihren einander zugewandten Seiten 60 und 61 mit senkrecht abstehenden, vorzugsweise hydraulisch verschiebbaren Bolzen 62 und 63 versehen, die in der beschriebenen Lage in Bohrungen 64 und 65 in den Einzelwerkzeugen 4˝, 5˝ eingreifen. Die Greifeinrichtung 51 wird dann zurückgefahren, wobei sie die beiden Satzwerkzeuge 4, 5 mitnimmt.

Während des Ein- und Ausbaus sind die Satzwerkzeuge 4, 5, über den Dorn 8 miteinander verbunden. Nach dem Einsetzen der Satzwerkzeuge 4, 5 in die Spindeln 10, 11 werden mit den in den Spindeln untergebrachten Spanneinrichtungen 13 die Anzugsbolzen 16 der Satzwerkzeuge erfaßt und mit ihren Kurzkegeln 17 in die entsprechende Aufnahme der Spindeln gezogen. Dann werden die Bolzen 62, 63 aus den Bohrungen 64, 65 der Werkzeuge 4, 5 zurückgezogen. Die Greifeinrichtung 51 läßt sich dann wieder in Pfeilrichtung 54 von den Satzwerkzeugen 4, 5 zurückfahren.

Als Träger für die Greifeinrichtung 51 können Lader, Kräne oder andere Hebezeuge eingesetzt werden.

## Patentansprüche

1. Vorrichtung zum Bearbeiten von rotationssymmetrischen Werkstückflächen, mit zwei Spindelstöcken, die jeweils eine Spindel (10, 11) für jeweils ein Werkzeug (4, 5) aufweisen, wobei die beiden Werkzeuge (4, 5) fluchtend zueinander angeordnet sind, und mit zwei Spannstöcken für das zu bearbeitende Werkstück,
dadurch gekennzeichnet, daß die beiden Werkzeuge (4, 5) an ihren einander zugewandten Enden aneinander abgestützt sind und das eine Werkzeug (4) einen axialen Vorsprung (8) und das andere Werkzeug (5) eine Vertiefung (9) aufweisen, in die der Vorsprung (8) eingreift, und daß die beiden Werkzeuge (4, 5) axial relativ zueinander verschiebbar sind.

2. Vorrichtung nach Anspruch 1,
dadurch gekennzeichnet, daß die Werkzeuge (4, 6) relativ zueinander drehbar sind.

3. Vorrichtung nach Anspruch 1 oder 2,
dadurch gekennzeichnet, daß zumindest das eine Werkzeug, vorzugsweise beide Werkzeuge (4, 5), Satzwerkzeuge sind.

4. Vorrichtung nach einem der Ansprüche 1 bis 3,
dadurch gekennzeichnet, daß wenigstens das eine Werkzeug, vorzugsweise beide Werkzeuge (4, 5), zur Aufnahme in der Spindel (10, 11) mit jeweils einem Kurzkegel (17) versehen sind und in Einbaulage an der Stirnseite (18) der Spindel (10, 11) anliegen.

5. Vorrichtung zum Bearbeiten von rotationssymmetrischen Werkstückflächen, mit zwei Spindelstöcken, die jeweils eine Spindel für jeweils ein Satzwerkzeug aufweisen, die jeweils mit scheibenförmigen Einzelwerkzeugen versehen sind, und mit zwei Spannstöcken für das zu bearbeitende Werkstück, nach einem der Ansprüche 1 bis 4,
dadurch gekennzeichnet, daß die Einzelwerkzeuge (4', 4'', 5' bis 5''') jedes Satzwerkzeuges (4, 5) jeweils einen sektorförmigen Ausschnitt (41, 47) aufweisen.

6. Vorrichtung nach Anspruch 5,
dadurch gekennzeichnet, daß zumindest eines der Einzelwerkzeuge (4', 4'', 5', bis 5''') eines der Satzwerkzeuge (4, 5) einen zusätzlichen Schneidenbereich (38', 45) zur Herstellung von Hinterstichen (50) auf der rotationssymmetrischen Werkstückfläche aufweist.

7. Vorrichtung nach Anspruch 6,
dadurch gekennzeichnet, daß die beiden Satzwerkzeuge (4, 5) radial zur rotationssymmetrischen Werkstückfläche gemeinsam verstellbar sind, und daß zumindest das eine der beiden Satzwerkzeuge zur Herstellung des Hinterstiches (50) axial verstellbar ist.

8. Vorrichtung nach einem der Ansprüche 1 bis 7,
dadurch gekennzeichnet, daß sie mit einer Ladeeinrichtung (51) für den Ein- und Ausbau der Werkzeuge (4, 5) versehen ist.

9. Vorrichtung nach Anspruch 8,
dadurch gekennzeichnet, daß die Ladeeinrichtung (51) zwei gegeneinander bewegbare Greifarme (52, 53) aufweist.

10. Vorrichtung nach Anspruch 9,
dadurch gekennzeichnet, daß die Greifarme (52, 53) verschiebbare Bolzen (62, 63) aufweisen, mit denen sie in Öffnungen (64, 65) in den Werkzeugen (4, 5) einfahrbar sind.

11. Vorrichtung nach einem der Ansprüche 1 bis 10,
dadurch gekennzeichnet, daß die Schneiden der Werkzeuge (4, 5) spiralig verlaufend angeordnet sind.

12. Vorrichtung nach einem der Ansprüche 1 bis 10,
dadurch gekennzeichnet, daß die Werkzeuge (4, 5) mehrere spiralig verlaufende Schneidenabschnitte (42 bis 45) aufweisen.

## Claims

1. A device for machining rotationally symmetrical workpiece surfaces, having two spindle heads, each with a spindle (10, 11) for a respective tool (4, 5), the two tools (4, 5) being arranged so as to be aligned with one another, the device also having two clamping heads for the workpiece to be machined, **characterised in that** the two tools (4, 5) are supported against one another at their mutually facing ends, and one tool (4) has an axial projection (8) and the other tool (5) has a recess (9) in which the projection (8) engages, and the two tools (4, 5) are axially displaceable in relation to one another.

2. A device in accordance with claim 1, **characterised in that** the tools (4, 6) [*sic*] are rotatable in relation to one another.

3. A device in accordance with claim 1 or 2, **characterised in that** at least one tool, and preferably both tools (4, 5), are sets of tools.

4. A device in accordance with one of claims 1 to 3, **characterised in that** at least one tool, and preferably both tools (4, 5), are provided with a respective truncated nose (17) for insertion in the spindle (10, 11), and, when in assembled position, the said tools rest against the end surface (18) of the spindle (10, 11).

5. A device for machining rotationally symmetrical workpiece surfaces, having two spindle heads, each with a spindle for a respective set of tools, each set being provided with disc-shaped individual tools, the device also having two clamping heads for the workpiece to be machined, in accordance with one of claims 1 to 4, **characterised in that** the individual tools (4', 4'', 5' to 5''') of each set of tools (4, 5) have a respective sector-shaped cut-out portion (41, 47).

6. A device in accordance with claim 5, **characterised in that** at least one of the individual tools (4', 4'', 5' to 5''') of one of the sets of tools (4, 5) has an additional cutting region (38', 45) for the production of recesses (50) on the rotationally symmetrical workpiece surface.

7. A device in accordance with claim 6, **characterised in that** the two sets of tools (4, 5) are jointly adjustable radially to the rotationally symmetrical workpiece surface, and at least one of the two sets of tools is axially adjustable for the production of the recess (50).

8. A device in accordance with one of claims 1 to 7, **characterised in that** it is provided with a loader (51) for assembly and removal of the tools (4, 5).

9. A device in accordance with claim 8, **characterised in that** the loader (51) has two gripping arms (52, 53) displaceable towards one another.

10. A device in accordance with claim 9, **characterised in that** the gripping arms (52, 53) have displaceable pins (62, 63) by means of which they can be guided into openings (64, 65) in the tools (4, 5).

11. A device in accordance with one of claims 1 to 10, **characterised in that** the cutting edges of the tools (4, 5) are arranged so as to extend helically.

12. A device in accordance with one of claims 1 to 10, **characterised in that** the tools (4, 5) have a plurality of helically extending cutting portions (42 to 45).

## Revendications

1. Appareil d'usinage de surfaces à symétrie de révolution sur des pièces, comprenant deux poupées porte-broche, qui comportent chacune une broche (10, 11) pour un outil respectif (4, 5), les deux outils (4, 5) étant agencés en alignement l'un par rapport à l'autre, et comprenant deux blocs de serrage pour la pièce à usiner, caractérisé en ce que les deux outils (4, 5) sont en appui l'un contre l'autre à leurs extrémités qui se font mutuellement face, l'un des outils (4) présentant une saillie axiale (8) et l'autre outil (5) une dépression (9) dans laquelle s'engage la saillie (8), et en ce que les deux outils (4, 5) sont déplaçables axialement l'un par rapport à l'autre.

2. Appareil selon la revendication 1, caractérisé en ce que les outils (4, 5) peuvent être tournés l'un par rapport à l'autre.

3. Appareil selon l'une ou l'autre des revendications 1 et 2, caractérisé en ce que l'un des outils, et de préférence les deux outils (4, 5) sont des outils d'un jeu d'outils combiné.

4. Appareil selon l'une quelconque des revendications 1 à 3, caractérisé en ce que l'un au moins des outils, de préférence les deux outils (4, 5) sont pourvus chacun d'un court manchon conique (17) afin d'être reçus dans la broche (10, 11), et en ce qu'ils sont en appui contre la face frontale (18) de la broche (10, 11) dans la position de montage.

5. Appareil d'usinage de surfaces à symétrie de révolution sur des pièces, comprenant deux poupées porte-broche, qui comportent chacune une broche pour un jeu d'outils combinés respectif, lesquels sont pourvus respectivement d'outils individuels en forme de disque, et comprenant des blocs de serrage pour la pièce à usiner, selon l'une quelconque des revendications 1 à 4, caractérisé en ce que les outils individuels (4', 4'', 5' à 5''') de chaque jeu d'outils combinés (4, 5) présente chacun une découpe (41, 47) en forme de secteur.

6. Appareil selon la revendication 5, caractérisé en ce que l'un au moins des outils individuels (4', 4'', 5' à 5''') de l'un des jeux d'outils combinés (4, 5) comporte une zone de coupe additionnelle (38', 45) pour la réalisation de contre-dépouilles (50) sur la surface à symétrie de révolution de la pièce.

7. Appareil selon la revendication 6, caractérisé en ce que les deux jeux d'outils combinés (4, 5) peuvent être réglés ensemble radialement par rapport à la surface à symétrie de révolution de la pièce, et en ce que l'un au moins des deux jeux d'outils combinés peut être réglé axialement pour la réalisation de la contre-dépouille (50).

8. Appareil selon l'une quelconque des revendications 1 à 7, caractérisé en ce qu'il est pourvu d'un dispositif de chargement (51) pour le montage et le démontage des outils (4, 5).

9. Appareil selon la revendication 8, caractérisé en ce que le dispositif de chargement (51) comporte deux bras de saisie (52, 53) mobiles l'un par rapport à l'autre.

10. Appareil selon la revendication 9, caractérisé en ce que les bras de saisie (52, 53) comportent des tiges en translation (62, 63) au moyen desquels ils peuvent être introduits dans des ouvertures (64, 65) dans les outils (4, 5).

11. Appareil selon l'une quelconque des revendications 1 à 10, caractérisé en ce que les arêtes de coupe des outils (4, 5) sont agencées de manière à s'étendre en spirale.

12. Appareil selon l'une quelconque des revendications 1 à 10, caractérisé en ce que les outils (4, 5) comportent plusieurs tronçons de coupe (42 à 45) qui s'étendent en spirale.
